# EUROPÄISCHE PATENTSCHRIFT

(11) **EP 3 039 324 B1**
(45) Veröffentlichungstag und Bekanntmachung des Hinweises auf die Patenterteilung: **23.05.2018**
(21) Anmeldenummer: 15722053.4
(22) Anmeldetag: 31.03.2015
(51) Int. Cl.: F16K 31/08, F16K 31/06

(54) **VENTILANORDNUNG**
VALVE ARRANGEMENT
ENSEMBLE SOUPAPE

(30) Priorität: 02.05.2014 DE 102014006510
(43) Veröffentlichungstag der Anmeldung: 06.07.2016
(73) Patentinhaber: Festo AG & Co. KG, 73734 Esslingen (DE)
(72) Erfinder: MUNZ, Gebhard, 73614 Schorndorf (DE); LENZ, Markus, 71384 Weinstadt (DE); SCHAEPPERLE, Jochen, 70180 Stuttgart (DE)
(74) Vertreter: Patentanwälte Magenbauer & Kollegen Partnerschaft mbB
(86) Internationale Anmeldenummer: PCT/EP2015/000686
(87) Internationale Veröffentlichungsnummer: WO 2015/165564

(56) Entgegenhaltungen:
- DE-A1- 10 114 628
- JP-A- S5 973 680
- US-A- 3 965 377
- US-A- 5 771 884

## Beschreibung

Die Erfindung betrifft eine Ventilanordnung, mit mindestens einer elektrisch betätigbaren Ventileinheit, die eine in einem Ventilgehäuse angeordnete elektrodynamische Antriebseinrichtung aufweist, die über eine bezüglich dem Ventilgehäuse ortsfeste und mindestens einen Permanentmagnet enthaltene ringförmige Permanentmagneteinheit und eine Spuleneinheit mit einer ebenfalls ringförmigen, koaxial in die ringförmige Permanentmagneteinheit eintauchenden Spule verfügt, wobei die Spule elektrisch bestrombar ist, um die Spuleneinheit relativ zu der Permanentmagneteinheit zu einer Antriebsbewegung anzutreiben, wobei die Ventileinheit ferner ein Verschlussmittel aufweist, das einem einem Ventilkanal zugeordneten Ventilsitz gegenüberliegt und das derart mit einem die Spule tragenden Spulenträger der Spuleneinheit bewegungsgekoppelt ist, dass es durch die Antriebsbewegung der Spuleneinheit relativ zu dem Ventilsitz positionierbar ist, um den zugeordneten Ventilkanal wahlweise abzusperren oder freizugeben, wobei die ringförmige Permanentmagneteinheit eine mittige axiale Führungsdurchbrechung aufweist, in die der Spulenträger der Spuleneinheit mit einem von der Spule umrahmten säulenförmigen Führungsabschnitt linear verschiebbar geführt axial eintaucht, wobei das dem Ventilsitz des Ventilkanals zugeordnete Verschlussmittel an dem Führungsabschnitt angeordnet ist.

Eine aus der DE 10 2009 033 585 A1 bekannte Ventilanordnung ist von elektrodynamisch betätigbarer Bauart und verfügt über eine nach dem Tauchspulenprinzip arbeitende elektrodynamische Antriebseinrichtung. Eine ringförmige Permanentmagneteinheit der Antriebseinrichtung ist in einem Aufnahmeraum des Ventilgehäuses befestigt und kooperiert mit einer in sie eintauchenden Spule, die gemeinsam mit einem sie tragenden und am Ventilgehäuse schwenkbar gelagerten Spulenträger eine insgesamt bezüglich dem Ventilgehäuse verschwenkbare Spuleneinheit bildet. Diese Spuleneinheit kooperiert mit einem ebenfalls am Ventilgehäuse verschwenkbar gelagerten Steuerelement, das ein Verschlussmittel trägt, welches mit einem Ventilsitz kooperiert, der die Öffnung eines in den Aufnahmeraum einmündenden Ventilkanals umrahmt. Die Spuleneinheit kann durch Bestromung ihrer Spule zu einer Antriebsbewegung angetrieben werden, bei der es sich um eine Schwenkbewegung relativ zum Ventilgehäuse handelt und bei der sie auf das Steuerelement einwirkt, so dass das Verschlussmittel seine Relativposition bezüglich des Ventilsitzes verändert. Auf diese Weise kann ein Fluiddurchtritt durch den dem Ventilsitz zugeordneten Ventilkanal wahlweise ermöglicht oder verhindert werden. Die bekannte Ventilanordnung hat zwar den Vorteil, dass die bewegliche Spuleneinheit eine geringe bewegte Masse aufweisen kann, was das Ansprechverhalten begünstigt. Bedingt durch den relativ komplexen mechanischen Aufbau der bewegten Komponenten hat die Ventilanordnung jedoch relativ große Abmessungen und erfordert einen großvolumigen Aufnahmeraum zur Aufnahme der bewegten Komponenten, woraus ein großes Totvolumen resultiert, das die Dynamik des Betriebsverhaltens beeinträchtigt.

Aus der US 5 771 884 A ist eine Ventilanordnung bekannt, die eine in einem Ventilgehäuse untergebrachte elektrodynamische Antriebseinrichtung aufweist. Die Antriebseinrichtung umfasst eine Permanentmagneteinheit, die eine axiale Durchbrechung aufweist, in der zwei Führungseinheiten befestigt sind. Die Antriebseinrichtung umfasst ferner eine Spuleneinheit, an der ein Schaftkörper angeordnet ist, der die axiale Durchbrechung durchsetzt, wobei er durch die beiden Führungseinheiten verschiebbar geführt ist. An dem Schaftkörper ist außerdem ein Ventilteller angeordnet.

Die DE 101 14 628 A1, US 3 965 377 A und JP S59 73680 A beschreiben jeweils eine Ventilanordnung, die mit einer elektrodynamischen Antriebseinrichtung ausgestattet ist.

Der Erfindung liegt die Aufgabe zugrunde, eine elektrodynamisch antriebbare Ventilanordnung zu schaffen, die bei kompakten Abmessungen eine hochdynamische Betriebsweise ermöglicht.

Zur Lösung dieser Aufgabe ist in Verbindung mit den eingangs genannten Merkmalen vorgesehen, dass die periphere Außenkontur des Führungsabschnittes und die Innenkontur der Führungsdurchbrechung so aufeinander abgestimmt sind, dass sie gemeinsam mindestens einen axial beidseits offenen Fluidübertrittskanal definieren, der die auf einander axial entgegengesetzten Seiten der Permanentmagneteinheit befindlichen Bereiche eines die Spuleneinheit aufnehmenden Aufnahmeraumes des Ventilgehäuses ständig fluidisch miteinander verbindet.

Auf diese Weise ist die durch entsprechende Bestromung der Spule hervorrufbare Antriebsbewegung der Spuleneinheit eine Linearbewegung in der axialen Richtung der Permanentmagneteinheit, wobei die die Spuleneinheit bei ihrer Antriebsbewegung führenden Linearführungsmittel von der axialen Führungsdurchbrechung der Permanentmagneteinheit und dem in diese Führungsdurchbrechung axial eintauchenden säulenförmigen Führungsabschnitt des Spulenträgers gebildet sind. Das mit dem Ventilsitz des zu steuernden Ventilkanals kooperierende Verschlussmittel befindet sich an dem Führungsabschnitt und macht daher dessen Linearbewegung unmittelbar mit, wobei es wahlweise als separate Komponente an dem Führungsabschnitt angeordnet oder von einem einstückigen Bestandteil des Führungsabschnittes gebildet sein kann. Somit sind die Spuleneinheit und das Verschlussmittel zu einer kompakten Einheit zusammengefasst, die sich platzsparend im Ventilgehäuse der Ventileinheit unterbringen lässt. Auf diese Weise lässt sich eine sehr kleinbauende Ventilanordnung realisieren, die aufgrund des geringen internen Totvolumens und der elektrodynamischen Antriebsmittel hochdynamisch betreibbar ist und bei Bedarf auch eine Anwendung als Proportionalventil ermöglicht. Verglichen mit nach dem Reluktanzprinzip arbeitenden Magnetventilanordnungen hat die elektrodynamisch arbeitende Ventilanordnung eine deutlich geringere Leistungsaufnahme und ermöglicht folglich einen sehr wirtschaftlichen Betrieb. Die für die Erzeugung der Antriebsbewegung verantwortliche Antriebskraft resultiert aus der sogenannten Lorentzkraft, die bei der Bestromung der Spule durch das Zusammenwirken des dabei erzeugten Stromflusses mit dem Magnetfeld der Permanentmagneteinheit hervorgerufen wird. Auf der Grundlage der erfindungsgernäßen Ventilanordnung lässt sich beispielsweise eine sehr kleine 2/2-Proportionalventilanordnung realisieren, die zur Vorsteuerung fluidbetätigter Hauptventile einsetzbar ist.

Die Führungsdurchbrechung ermöglicht eine ständige Fluidverbindung zwischen den die Permanentmagneteinheit axial beidseits flankierenden Bereichen, insbesondere zwischen einer weiter unten erwähnten Ventilkammer und einer ebenfalls weiter unten erwähnten Antriebskammer. Auf diese Weise herrscht im Innern des Ventilgehäuses axial beidseits der Permanentmagneteinheit der gleiche Druck, was eine Kompensation der auf die Spuleneinheit einwirkenden fluidischen Druckkräfte bewirkt. Dementsprechend kann die Spuleneinheit einschließlich des Verschlussmittels mit relativ geringen elektrodynamisch erzeugten Kräften bewegt und in der jeweils gewünschten Position gehalten werden. Durch eine aufeinander abgestimmte Gestaltung der Außenkontur des Führungsabschnittes und der Innenkontur der Führungsdurchbrechung ist unabhängig von der momentanen Relativposition zwischen der Spuleneinheit und der Permanentmagneteinheit die angestrebte Fluidverbindung zwischen den beiden axialen Seiten der Permanentmagneteinheit gegeben.

Vorteilhafte Weiterbildungen der Erfindung gehen aus den Unteransprüchen hervor.

Zweckmäßigerweise befindet sich das Verschlussmittel an der dem Ventilsitz zugewandten Stirnseite des Führungsabschnittes.

Es ist von Vorteil, wenn das Verschlussmittel mit dem Führungsabschnitt des Spulenträgers zu einer Baueinheit zusammengefasst ist. Besonders zweckmäßig ist eine Realisierung des Verschlussgliedes durch ein beispielsweise plättchenförmiges Dichtungselement, das bevorzugt aus einem Elastomermaterial besteht und das an dem säulenförmigen Führungsabschnitt befestigt ist, beispielsweise mittels einer Klebeverbindung.

Vorzugsweise ist die Spuleneinheit derart im Ventilgehäuse der Ventileinheit angeordnet, dass sie eine einer ersten axialen Seite der Permanentmagneteinheit zugeordnete Ventilkammer von einer einer entgegengesetzten zweiten axialen Seite der Permanentmagneteinheit zugeordneten Antriebskammer abteilt, wobei der durch das Verschlussmittel steuerbare Ventilkanal in die Ventilkammer einmündet und die Spule in der Antriebskammer angeordnet ist. Die die Permanentmagneteinheit zentral durchsetzende Führungsdurchbrechung mündet einerseits in die Ventilkammer und andererseits in die Antriebskammer ein, wobei der säulenförmige Führungsabschnitt von der Seite der Antriebskammer her in die Führungsdurchbrechung eintaucht. Das Verschlussmittel befindet sich an der der Ventilkammer zugeordneten Stirnseite des Führungsabschnittes.

Vorzugsweise umschließt das Ventilgehäuse einen zur Umgebung hin abgeschlossenen internen Aufnahmeraum, in dem die elektrodynamische Antriebseinrichtung derart aufgenommen ist, dass der Aufnahmeraum von der Permanentmagneteinheit in die Ventilkammer und in die Antriebskammer unterteilt wird.

Zweckmäßigerweise ist die ringförmige Spule axial an einer Tragplatte des Spulenträgers befestigt, die der Permanentmagneteinheit an einer ihrer beiden axialen Seiten vorgelagert ist. Bei der Antriebsbewegung der Spuleneinheit verändert sich der axiale Abstand zwischen der Tragplatte und der Permanentmagneteinheit. Der säulenförmige Führungsabschnitt ist an der Tragplatte befestigt und ragt in axialer Richtung von der Tragplatte weg, wobei er bevorzugt einstückig mit der Tragplatte ausgebildet ist. Der gesamte Spulenträger besteht bevorzugt aus einem nicht magnetisierbaren Material und vorzugsweise aus einem Kunststoffmaterial. Gleiches gilt zweckmäßigerweise auch für das Ventilgehäuse.

Die ringförmige Spule taucht zweckmäßigerweise von einer axialen Seite her in eine axial offene ringförmige Eintauchausnehmung der Permanentmagneteinheit ein. Diese Eintauchausnehmung ist radial innen zweckmäßigerweise von einem hohlzylindrischen Wandabschnitt der Permanentmagneteinheit begrenzt, der gleichzeitig auch die Führungsdurchbrechung begrenzt.

Insbesondere, jedoch nicht ausschließlich dann, wenn die mit dem Verschlussmittel ausgestattete Spuleneinheit in Bezug auf die an ihr angreifenden fluidischen Druckkräfte zumindest weitestgehend kompensiert ist, ist es von Vorteil, wenn die Ventileinheit mit Federmitteln ausgestattet ist, durch die die Spuleneinheit axial in eine Grundstellung vorgespannt ist. Diese Grundstellung stimmt zweckmäßigerweise mit der am zugeordneten Ventilsitz anliegenden Schließstellung des Verschlussmittels überein. Folglich ist der steuerbare Ventilkanal im elektrisch deaktivierten Zustand der elektrodynamischen Spuleneinheit durch das Verschlussmittel abgesperrt. Durch Aktivierung der Spuleneinheit können elektrodynamische Stellkräfte erzeugt werden, die die Federkraft überwinden und die Spuleneinheit einschließlich des Verschlussmittels je nach Bedarf mehr oder weniger weit vom Ventilsitz abheben, um einen mehr oder weniger großen Strömungsquerschnitt des steuerbaren Ventilkanals freizugeben.

Selbstverständlich lässt sich die Ventileinheit auch nach Art eines Schaltventils mit nur zwei Schaltstellungen der Spuleneinheit betreiben, so dass außer der Schließstellung nur eine den Ventilkanal freigebende Offenstellung des Verschlussmittels vorgebbar ist.

Die Federmittel können prinzipiell beliebiger Art sein. Beispielsweise kann der Spulenträger eine sich koaxial in den säulenförmigen Führungsabschnitt hinein erstreckende Ausnehmung aufweisen, in die eine Schraubendruckfeder eingesetzt ist, die einerseits auf den Führungsabschnitt einwirkt und sich andererseits mit einem aus dem Spulenträger herausragenden Endabschnitt am Ventilgehäuse abstützt.

Als vorteilhafter wird allerdings eine Bauform angesehen, bei der die Federmittel eine Blattfeder umfassen, die mit einer Ausrichtung quer zur Bewegungsrichtung der Spuleneinheit axial benachbart zu der Antriebseinrichtung im Ventilgehäuse angeordnet ist. Diese Blattfeder stützt sich einerseits an der Spuleneinheit und andererseits bezüglich des Ventilgehäuses ab. Bevorzugt hat die Blattfeder keine rein lineare Längserstreckung, sondern ist zumindest leicht gebogen, um eine gewisse Vorspannung zu erzeugen. Von Vorteil ist es, wenn die Ventileinheit über Einstellmittel verfügt, mit deren Hilfe sich die Vorspannung der Blattfeder oder auch eventueller andersartiger Federmittel variabel vorgeben lässt.

Die Permanentmagneteinheit ist zweckmäßigerweise derart im Ventilgehäuse angeordnet, dass sie als Trennwand zwischen einer mit dem zu steuernden Ventilkanal kommunizierenden Ventilkammer und einer die Spule aufnehmenden Antriebskammer fungiert. Die Blattfeder ist dabei zweckmäßigerweise ausschließlich in der Antriebskammer angeordnet und hat eine Längserstreckung, die quer und insbesondere rechtwinkelig zur Längsachse der Permanentmagneteinheit verläuft.

Ein besonders zweckmäßiger Aufbau der Blattfeder sieht vor, dass selbige mäanderförmig strukturiert ist. Dabei verfügt sie über wenigstens drei sich nebeneinander erstreckende und insbesondere einstückig miteinander verbundene Federschenkel, die bevorzugt parallel zueinander verlaufen. Bevorzugt enthält die Blattfeder genau drei solcher Federschenkel. Mit ihren beiden äußeren Federschenkeln stützt sich die Blattfeder bevorzugt an der Spuleneinheit ab, während sie mit mindestens einem und bevorzugt dem einzigen zwischen den äußeren Federschenkeln liegenden inneren Federschenkel bezüglich des Ventilgehäuses abgestützt ist. Letzteres ist im Rahmen einer direkten Abstützung möglich, erfolgt vorzugsweise aber im Rahmen einer indirekten Abstützung unter Zwischenschaltung von Einstellmitteln, mit deren Hilfe sich die Federvorspannung variabel vorgeben lässt.

Die mäanderförmige Blattfeder ist insbesondere so ausgelegt, dass sie die passende Federrate erreicht und die erforderliche Dichtkraft aufbringt, um im unbetätigten Zustand der Spuleneinheit das Verschlussmittel unter Abdichtung an den zugeordneten Ventilsitz anzudrücken und den zugeordneten Ventilkanal dadurch fluiddicht abzusperren. Die Blattfeder ist bevorzugt so ausgebildet, dass sie in dieser Grundstellung der Spuleneinheit gänzlich ohne oder mit nur geringer Wölbung, d.h. flach im Innern des Ventilgehäuses angeordnet ist, so dass sie einen nur minimale Bauraum einnimmt und dementsprechend das Totvolumen im Innern des Ventilgehäuses auf ein Minimum reduziert werden kann.

Vorzugsweise liegt die Blattfeder auf einem erhabenen Randabschnitt des Spulenträgers auf. Die Blattfeder ist zweckmäßigerweise verdrehgesichert an dem Spulenträger fixiert.

Die schon erwähnten Einstellmittel sind vorteilhaft vorhanden, um die Federvorspannung der Federmittel variabel vorgeben zu können. Die Vorgabe der Federvorspannung erfolgt insbesondere beim Zusammenbau der Ventilanordnung im Rahmen ihrer Fertigung. Somit kann auch bei einer Serienfertigung eine gleichbleibende Federvorspannung bei allen Ventilanordnungen eingestellt werden.

Eine Möglichkeit zur Realisierung der Einstellmittel besteht im Einbau einer in das Ventilgehäuse eingeschraubten Einstellschraube, an der sich die Federmittel abstützen und deren bezüglich des Ventilgehäuses eingenommene Axialposition durch Verdrehen aufgrund der dabei überlagerten Axialbewegung einstellbar ist. Insbesondere bei einer Serienfertigung von Ventilanordnungen wird allerdings eine andere Justageart für die Einstellung der Federvorspannung vorgezogen. Insbesondere wird dabei auf eine Laserjustage zurückgegriffen, die in der Serienfertigung in Sekundenbruchteilen vollautomatisch vollzogen werden kann.

In diesem Zusammenhang enthalten die Einstellmittel zweckmä-βigerweise ein starres Einstellelement, das sich einerseits am Ventilgehäuse und andererseits an den Federmitteln abstützt und das über mindestens einen plastisch verformbaren Einstellabschnitt verfügt, dessen plastische Verformung eine dauerhafte Lageveränderung eines die Federmittel abstützenden Abstützabschnittes bezüglich des Ventilgehäuses in der axialen Richtung der Permanentmagneteinheit bewirkt. Das System ist anfänglich insbesondere so ausgelegt, dass die Federmittel zunächst nur eine kleine federnde Stellkraft ausüben. Anschließend wird durch eine Öffnung des Ventilgehäuses hindurch mit Laserpulsen oder mittels einer anderen Energiequelle auf den plastisch verformbaren Einstellabschnitt eingewirkt, so dass sich selbiger erwärmt und so verbiegt, dass die Federmittel um ein gewisses Maß komprimiert werden, wodurch ihre Vorspannung ansteigt. Dieser Vorgang des Energieeintrages in den plastisch verformbaren Einstellabschnitt wird so oft wiederholt, bis die gewünschte Federvorspannung der Federmittel eingestellt ist.

Selbstverständlich kann die erforderliche Verformungswärme auch auf andere Art in den verformbaren Einstellabschnitt des Einstellelementes eingeleitet werden, jedoch wird die Verwendung von Laserstrahlenergie als besonders vorteilhaft angesehen, weil sie besonders zielgerichtet applizierbar ist und somit die benachbarten Bereiche der Ventileinheit keiner unerwünschten Erwärmung ausgesetzt werden.

Bevorzugt enthält das Einstellelement einen sich am Ventilgehäuse abstützenden ringförmigen Abstützabschnitt und einen diesen ringförmigen Abstützabschnitt durchquerenden stegförmigen Abschnitt, der einen Abstützabschnitt bildet an dem die Federmittel anliegen. Der stegförmige Abschnitt fungiert als plastisch verformbarer Einstellabschnitt und erfährt bei dem erwähnten Energieeintrag eine bleibende Durchbiegung, sodass sich die Lage des an den Federmitteln anliegenden Abstützabschnittes verändert, was die angestrebte Federvorspannung hervorruft. Ein derart ausgebildetes Einstellelement lässt sich sehr kostengünstig aus Metall durch ein Stanzverfahren erzeugen.

Zur reproduzierbaren Einstellung der Federvorspannung besteht die Möglichkeit, im Rahmen der Einstellung der Federvorspannung die Dichtheit des vom Verschlussmittel beaufschlagten Ventilsitzes zu messen. Als weitere vorteilhafte Möglichkeit wird das Bestromen der Spule mit einem bestimmten Wert und die gleichzeitige Messung des Volumenstroms des den Ventilsitz passierenden Druckmediums angesehen. Damit kann für den betreffenden Stromwert ein bestimmter Durchflusswert einjustiert werden, was letztlich bedeutet, dass bei den Ventileinheiten sämtlicher justierter Ventilanordnungen die Durchflusskennlinien durch den gleichen Punkt laufen.

Vorzugsweise begrenzt die Antriebseinrichtung im Ventilgehäuse eine Ventilkammer, in die außer einem steuerbaren Ventilkanal, dessen Mündung von einem Ventilsitz umrahmt ist, mit dem das Verschlussmittel kooperiert, auch noch ein weiterer Ventilkanal einmündet, der hinsichtlich seines freien Strömungsquerschnittes nicht steuerbar ist und der unabhängig von der Position des Verschlussmittels mit der Ventilkammer kommuniziert. Eine derart ausgebildete Ventileinheit eignet sich zur Verwendung als 2/2-Wegeventil, mit dessen Hilfe eine Fluidverbindung zwischen den beiden Ventilkanälen wahlweise freigegeben oder abgesperrt werden kann. Dabei bestehen je nach Belegung der Ventilkanäle die Möglichkeit, die Ventileinheit als Belüftungsventil oder als Entlüftungsventil zu nutzen. Bei einer Ausführung als Belüftungsventil ist die Fluidverbindung zwischen einer Druckquelle und einem Verbraucher steuerbar, bei einer Ausgestaltung als Entlüftungsventil ist die Fluidverbindung zwischen einem Verbraucher und einer Drucksenke, insbesondere der Atmosphäre steuerbar.

Insgesamt ist mit der elektrodynamischen Bauart der Antriebseinrichtung eine hohe Dynamik im Bewegungsverhalten verbunden, die insbesondere aus der geringen zu bewegenden Masse und der sehr geringen Induktivität der Spule resultiert, und außerdem auch aus der annähernd proportionalen Kraft-Weg-Kennlinie durch den direkten Zusammenhang zwischen der Lorentzkraft und der Bestromungsintensität.

Bei einer vorteilhaften Ausführungsform ist die Ventileinheit patronenartig konzipiert und in einen mit einer entsprechenden Aufnahme ausgebildeten Anschlusskörper eingesetzt. Der Anschlusskörper ist von Anschlusskanälen durchsetzt, die mit Ventilkanälen der Ventileinheit kommunizieren. Ein und dieselbe Ventileinheit kann somit wahlweise mit Anschlusskörpern unterschiedlicher Bauart und unterschiedlicher Kanalverläufe kombiniert werden, was die Herstellungskosten der Ventilanordnung gering hält.

Nachfolgend wird die Erfindung anhand der beiliegenden Zeichnung näher erläutert. In dieser zeigen:

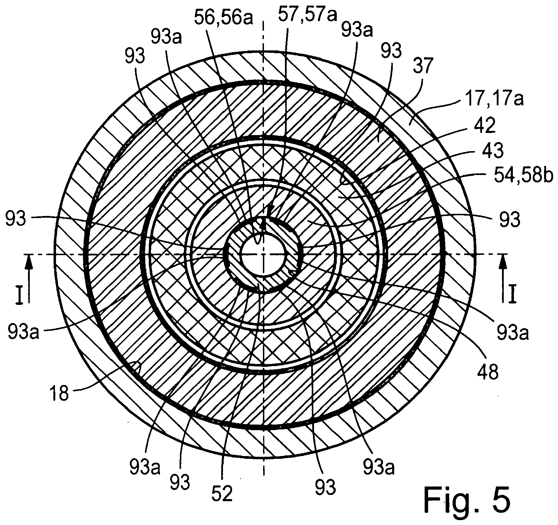

- Figur 1: einen Längsschnitt durch eine bevorzugte Ausführungsform der erfindungsgemäßen Ventilanordnung in der Grundstellung der Spuleneinheit, die hier exemplarisch mit einer Schließstellung des Verschlussmittels einhergeht, wobei in einem separaten Ausschnitt ein hiervon abweichender Betriebszustand mit eine Offenstellung einnehmendem Verschlussmittel illustriert ist, wobei die Schnittebene entsprechend I-I aus Figur 5 verläuft,
- Figur 2: einen mit Figur 1 vergleichbaren isometrischen Längsschnitt der Ventilanordnung,

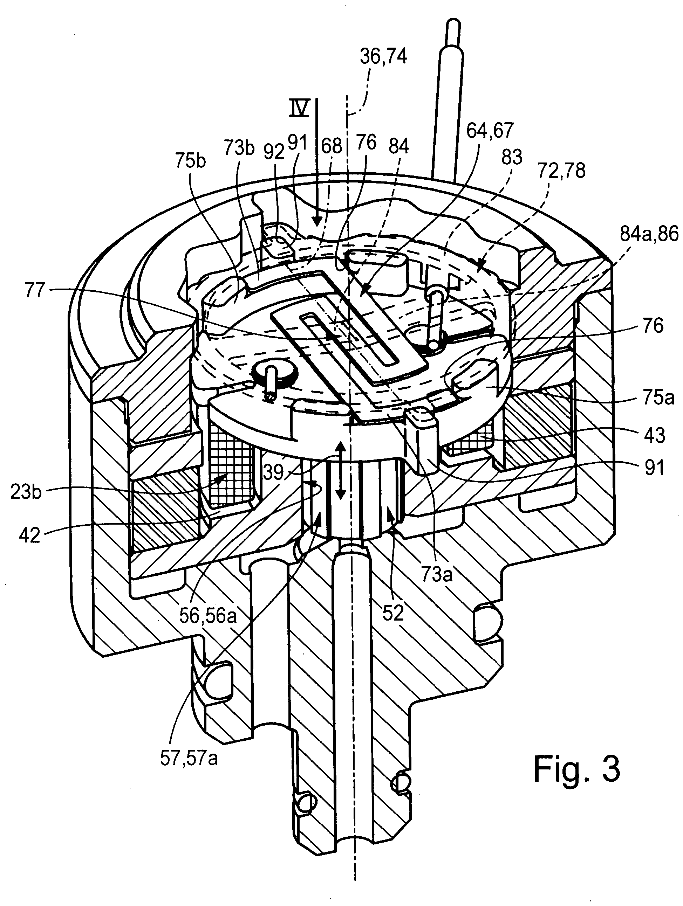

- Figur 3: eine teilweise aufgebrochende Einzeldarstellung der bei der Ventilanordnung der Figuren 1 und 2 vorhandenen Ventileinheit, wobei ein zur Einstellung der Federvorspannung dienendes Einstellelement der besseren Übersichtlichkeit wegen nur gestrichelt angedeutet ist,

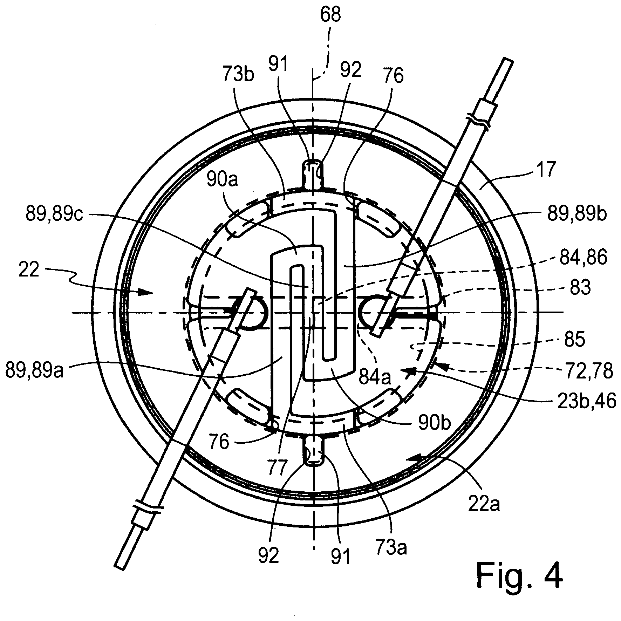

- Figur 4: eine Draufsicht auf die Ventileinheit aus Figur 3 mit Blickrichtung gemäß Pfeil IV aus Figur 3 im geöffneten Zustand des Ventilgehäuses, und
- Figur 5: einen Querschnitt durch die Ventilanordnung im Bereich der Antriebseinrichtung gemäß Schnittlinie V-V aus Figur 1.

Die in ihrer Gesamtheit mit Bezugsziffer 1 bezeichnete Ventilanordnung dient der Steuerung der Strömung eines Fluides, insbesondere eines gasförmigen Fluides und dabei vorzugsweise von Druckluft. Sie lässt sich aber auch zur Steuerung flüssiger Medien einsetzen.

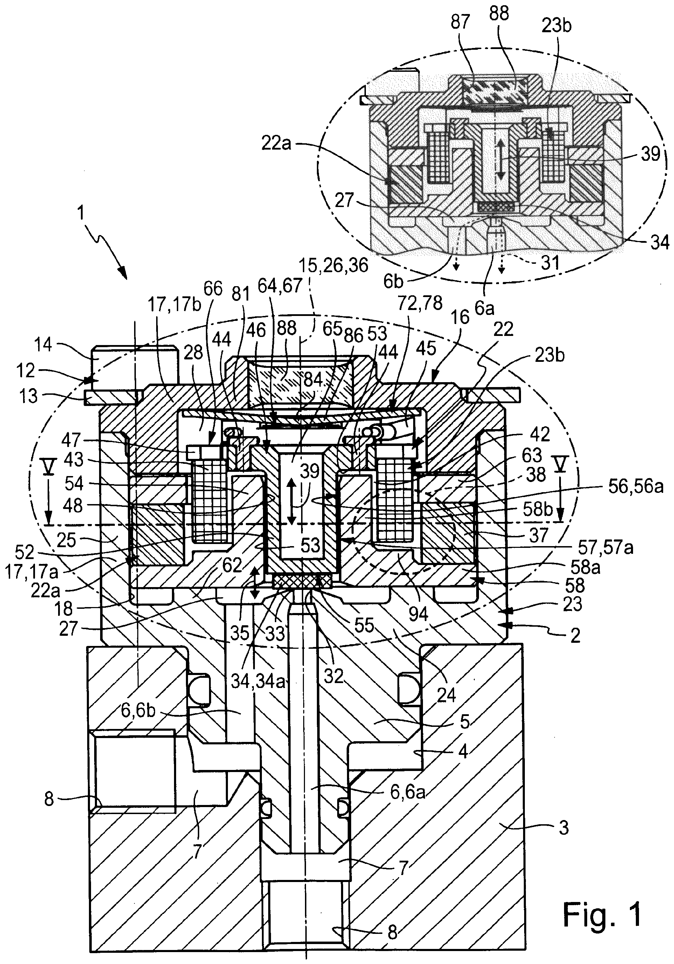

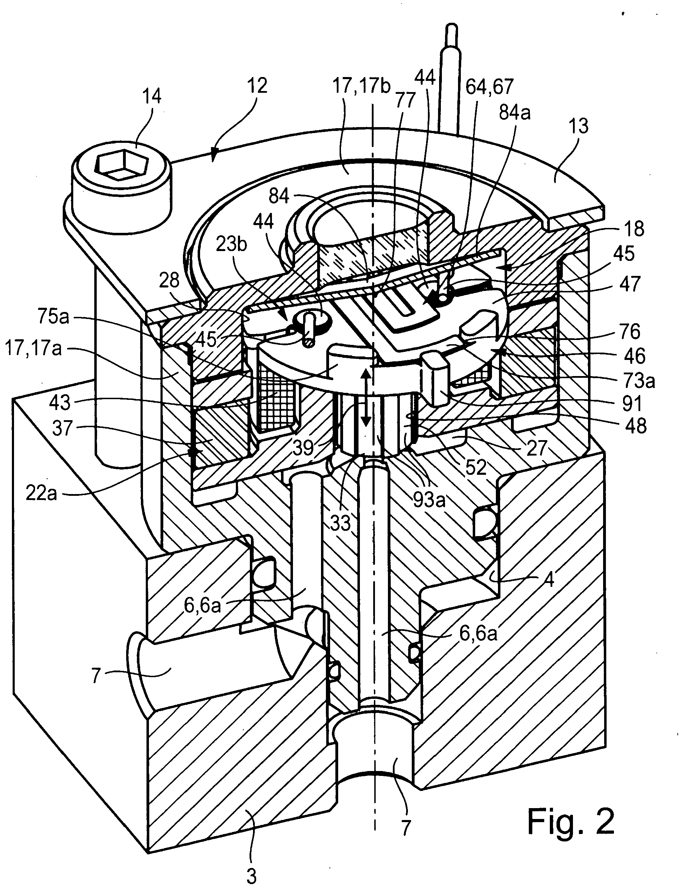

Die Ventilanordnung 1 verfügt über eine Ventileinheit 2, die für sich allein verwendbar ist oder aber vorzugsweise in Kombination mit einem Anschlusskörper 3, mit dem sie zu einer Baugruppe kombinierbar ist. Der Anschlusskörper 3 hat eine sacklochartig ausgebildete Aufnahme 4, in die die Ventileinheit 2 mit einem Sockelabschnitt 5 unter Abdichtung patronenartig einsetzbar ist. Die Figuren 1 und 2 zeigen die Ventilanordnung 1 im zusammengefügten Zustand der sich aus der Ventileinheit 2 und dem Anschlusskörper 3 zusammensetzenden Baugruppe.

In der Ventileinheit 2 verlaufen mehrere Ventilkanäle 6. Diese Ventilkanäle 6 kommunizieren mit jeweils einem von mehreren Anschlusskanälen 7, die den Anschlusskörper 3 durchsetzen. Jeder Anschlusskanal 7 mündet mit einer-Anschlussöffnung 8 zu einer Außenfläche des Anschlusskörpers 3 aus, wo er mit einer weiteren zur Fluidführung geeigneten Komponente verbindbar ist, beispielsweise mit einer Fluidleitung.

Die in die Aufnahme 4 des Anschlusskörpers 3 eingesetzte Ventileinheit 2 ist mittels einer Befestigungseinrichtung 12 in bevorzugt lösbarer Weise an dem Anschlusskörper 3 befestigt. Die Ventileinheit 2 hat eine Hauptachse 15, bezüglich der der Sockelabschnitt 5 koaxial angeordnet ist und in deren Achsrichtung die Ventileinheit 2 durch die Befestigungseinrichtung 12 mit dem Anschlusskörper 3 verspannt ist. Hierzu enthält die Befestigungseinrichtung 12 beim Ausführungsbeispiel ein bevorzugt rahmenförmiges Spannelement 13, das an einer dem Sockelabschnitt 5 in Achsrichtung der Hauptachse 15 entgegengesetzten oberen Stirnfläche 16 der Ventileinheit 2 anliegt und mittels mehrerer an der Ventileinheit 2 vorbeigreifender Befestigungsschrauben 14 mit dem Anschlusskörper 3 verschraubt ist. Die Ventileinheit kann allerdings auch auf andere Weise an dem Anschlusskörper 3 befestigt werden.

Die Ventileinheit 2 besitzt ein Ventilgehäuse 17, das zweckmäßigerweise den Sockelabschnitt 5 ausbildet. Das Ventilgehäuse 17 begrenzt einen Aufnahmeraum 18 für eine im Einzelnen noch zu erläuternde Antriebseinrichtung 22, der abgesehen von den in ihn einmündenden Ventilkanälen 6 zur Umgebung hin bevorzugt fluiddicht verschlossen ist.

Das Ventilgehäuse 17 ist zweckmäßigerweise mehrteilig ausgebildet. Exemplarisch verfügt es über ein den Sockelabschnitt 5 definierendes Gehäuseunterteil 17a und über einen an einer dem Sockelabschnitt 5 entgegengesetzten Oberseite daran angesetzten Gehäusedeckel 17b. Das Gehäuseunterteil 17a hat einen sich an den Sockelabschnitt 5 anschließenden, bevorzugt topfförmigen Gehäuseabschnitt 23 mit einer Bodenwand 24 und einer sich koaxial daran anschließenden, nach oben ragenden und bevorzugt hülsenförmigen Seitenwand 25. Der Sockelabschnitt 5, die Bodenwand 24 und die Seitenwand 25 sind zweckmäßigerweise einstückig miteinander ausgebildet. Gemeinsam begrenzen die Bodenwand 24 und die Seitenwand 25 den Aufnahmeraum 18, der an der der Bodenwand 24 entgegengesetzten Oberseite außerdem von dem an die Seitenwand 25 angesetzten Gehäusedeckel 17b verschlossen ist. Bei abgenommenem Gehäusedeckel 17b ist der Aufnahmeraum 18 zugänglich, um die Antriebseinrichtung 22 einzusetzen.

Vorzugsweise werden der Gehäusedeckel 17b und das Gehäuseunterteil 17a durch die Befestigungseinrichtung 12 axial zusammengehalten. Eine gesonderte gegenseitige Befestigung ist aber ebenfalls möglich.

Der Aufnahmeraum 18 hat eine mit der Hauptachse 15 zusammenfallende Längsachse 26. Die Ventileinheit 2 hat eine dem Sockelabschnitt 5 bzw. der Bodenwand 24 zugeordnete Unterseite und eine dem Gehäusedeckel 17b zugeordnete Oberseite. Dementsprechend verläuft die Hauptachse 15 in einer Höhenrichtung der Ventilanordnung 1. Diese Richtungsangaben sollen allerdings nur der einfacheren Beschreibung dienen und sind nicht einschränkend zu verstehen. Die Ventilanordnung 1 kann ohne weiteres auch mit der Oberseite nach unten weisend oder mit seitwärts orientierter Oberseite betrieben werden.

Die bereits angesprochene Antriebseinrichtung 22 ist in den Aufnahmeraum 18 eingesetzt und unterteilt den Aufnahmeraum 18 axial in eine beim Ausführungsbeispiel unten liegende Ventilkammer 27 und eine oben liegende Antriebskammer 28. An ihrer Unterseite ist die Ventilkammer 27 von der Bodenwand 24 des Ventilgehäuses 17 begrenzt. Die Antriebskammer 28 ist an ihrer der Antriebseinrichtung 22 axial gegenüberliegenden Seite von einer Gehäusewand 81 des Ventilgehäuses 17 begrenzt, die zweckmäßigerweise zu dem Gehäusedeckel 17b gehört.

Einer der schon erwähnten Ventilkanäle 6 ist ein durch die Ventileinheit 2 steuerbarer Ventilkanal 6a und mündet mit einer Kanalöffnung 32 an der Bodenwand 24 in die Ventilkammer 27 ein. Die Kanalöffnung 32 ist dabei von einem bevorzugt erhaben ausgebildeten Ventilsitz 33 umrahmt, der bevorzugt ein einstückiger Bestandteil des Ventilgehäuses 17 ist. Die Kanalöffnung 32 weist in die Achsrichtung der Hauptachse 15 und ist bevorzugt koaxial zu dieser Hauptachse 15 angeordnet.

Ein zweiter, nicht steuerbarer Ventilkanal 6b der Ventilkanäle 6 mündet beabstandet zu dem steuerbaren Ventilkanal 6a ebenfalls in die Ventilkammer 27 ein, und zwar insbesondere ebenfalls an der Bodenwand 24.

Die Ventileinheit 2 verfügt über ein dem Ventilsitz 33 axial gegenüberliegendes Verschlussmittel 34. Dieses ist in Achsrichtung der Hauptachse 15 relativ zu dem Ventilsitz 33 bewegbar und kann dadurch wahlweise in einer aus der Hauptabbildung der Figur 1 ersichtlichen Schließstellung oder in mindestens einer Offenstellung positioniert werden, wobei eine der möglichen Offenstellungen in der verkleinerten Ausschnittsabbildung der Figur 1 illustriert ist.

In der Schließstellung liegt das Verschlussmittel 34 unter Abdichtung an dem Ventilsitz 33 an und sperrt den steuerbaren Ventilkanal 6a ab. Dadurch ist eine Fluidverbindung zwischen dem steuerbaren Ventilkanal 6a und dem nicht steuerbaren Ventilkanal 6b unterbrochen. In der Offenstellung ist das Verschlussmittel 34 von dem Ventilsitz 33 abgehoben, so dass der steuerbare Ventilkanal 6a freigegeben ist und durch die Ventilkammer 27 hindurch ein Fluidübertritt zwischen den beiden Ventilkanälen 6a, 6b möglich ist, wie dies in Figur 1 durch Pfeile 35 angedeutet ist.

Vorzugsweise ist die Ventileinheit 2 als Proportionalventil betreibbar, bei dem das Verschlussmittel 34, insbesondere stufenlos, in mehreren Offenstellungen positionierbar ist, in denen es unterschiedlich weit vom Ventilsitz 33 abgehoben ist, um für das strömende Fluid unterschiedliche Strömungsraten vorgeben zu können.

Bei der beschriebenen Funktionalität ist die Ventileinheit 2 als ein 2/2-Wegeventil und insbesondere als ein 2/2-Proportionalwegeventil verwendbar.

Bei einer möglichen Anwendung ist an den steuerbaren Ventilkanal 6a eine Druckquelle und an den nicht steuerbaren Ventilkanal 6b ein Verbraucher, beispielsweise ein fluidbetätigter Antrieb angeschlossen. Je nach Position des Verschlussmittels 34 kann somit der Verbraucher von der Druckquelle abgetrennt oder mittels des von der Druckquelle stammenden Druckmediums belüftet werden. Bei einem anderen Anwendungsfall ist der steuerbare Ventilkanal 6a an einen Verbraucher und der nicht steuerbare Ventilkanal 6b an die Atmosphäre angeschlossen. In diesem Fall lässt sich die Ventileinheit als Entlüftungsventil betreiben, mit dessen Hilfe ein angeschlossener Verbraucher bei Bedarf entlüftet werden kann. Zur Verbindung mit einer Druckquelle, einem Verbraucher und/oder der Atmosphäre werden, wenn die Ventilanordnung 1 mit dem Anschlusskörpers 3 ausgestattet ist, die mit den Ventilkanälen 6 kommunizierenden Anschlusskanäle 7 genutzt.

Die im Folgenden auch als Positionierbewegung 35 bezeichnete und durch einen Doppelpfeil illustrierte Bewegung des Verschlussmittels 34 zum Verlagern in die gewünschte Stellung ist mittels der Antriebseinrichtung 22 hervorrufbar. Letztere ist auch in der Lage, das Verschlussmittel 34 in der jeweils gewünschten Position zu halten.

Die Antriebseinrichtung 22 ist von elektrodynamischer Bauart und nach dem sogenannten Tauchspulenprinzip konzipiert, das oft auch bei Lautsprechern anzutreffen ist. Hierzu enthält die Antriebseinrichtung 22 eine ortsfest bezüglich des Ventilgehäuses 17 angeordnete ringförmige Permanentmagneteinheit 22a und eine diesbezüglich unter Ausführung einer durch einen Doppelpfeil illustrierten Antriebsbewegung 39 bewegbare Spuleneinheit 23b. Die Permanentmagneteinheit 22a hat eine exemplarisch mit der Hauptachse 15 zusammenfallende Längsachse 36, wobei die Antriebsbewegung 39 eine Linearbewegung in der Achsrichtung der Längsachse 36 ist.

Die Permanentmagneteinheit 22a enthält mindestens einen und bevorzugt genau einen Permanentmagnet 37, der exemplarisch als Ringmagnet ausgebildet und koaxial zu der Längsachse 36 angeordnet ist. Er ist axial magnetisiert und erzeugt ein gestrichelt angedeutetes permanentmagnetisches Magnetfeld 38. Die Permanentmagneteinheit 22a weist eine axial in Richtung zu der Antriebskammer 28 offene Ausnehmung auf, die als Eintauchausnehmung 42 bezeichnet sei und die ringförmig gestaltet und koaxial zu der Längsachse 36 angeordnet ist. In diese Eintauchausnehmung 42 ragt von der Seite der Antriebskammer 28 her eine zu der Permanentmagneteinheit 22a koaxiale ringförmige Spule 43 hinein, die ein Bestandteil der Spuleneinheit 23b ist. Die Spule 43 ist elektrisch bestrombar, wobei die dazu erforderliche Ansteuerspannung an zwei mit dem Spulendraht der Spule 43 kontaktierten Kontaktelementen 44 der Spuleneinheit 23b anlegbar ist. Beispielsweise ist an jedes der Kontaktelemente 44 ein elektrisches Anschlusskabel 45 angeschlossen und insbesondere angelötet, das aus dem Ventilgehäuse 17 herausgeführt ist und dort mit einer nicht weiter abgebildeten Spannungsquelle verbunden werden kann.

Die Spule 43 ist an einem Spulenträger 46 der Spuleneinheit 23b befestigt. Hierzu kann beispielsweise eine Klebeverbindung vorgesehen sein.

Der zweckmäßigerweise aus einem Kunststoffmaterial oder aus einem anderen unmagnetischen Material bestehende Spulenträger 46 verfügt bevorzugt über eine in der Antriebskammer 28 angeordnete und der Permanentmagneteinheit 22a mit axialem Abstand vorgelagerte Tragplatte 47. Sie ragt radial nach außen und über die Öffnung der Eintauchausnehmung 42 hinweg, wobei sie an ihrer der Permanentmagneteinheit 22a zugewandten Axialseite die Spule 43 trägt.

Die erwähnten Kontaktelemente 44 sind an dem Spulenträger 46 und dort insbesondere an der Tragplatte 47 angeordnet.

Die Permanentmagneteinheit 22 ist in ihrem zentralen Bereich axial durchbrochen. Sie weist eine einerseits zur Ventilkammer 27 und andererseits zur Antriebskammer 28 ausmündende zentrale Durchbrechung auf, die aufgrund ihrer noch zu erläuternden Zweckbestimmung als Führungsdurchbrechung 48 bezeichnet wird. Die Führungsdurchbrechung 48 ist bevorzugt koaxial mit der Kanalöffnung 32 des steuerbaren Ventilkanals 6a ausgerichtet.

In die Führungsdurchbrechung 48 ragt von der Seite der Antriebskammer 28 her ein säulenförmiger Führungsabschnitt 52 des Spulenträgers 46 hinein. Der Führungsabschnitt 52 ist rückseitig fest und insbesondere einstückig mit der Tragplatte 47 verbunden.

Wenn man die Spuleneinheit 23b isoliert betrachtet, ist der säulenförmige Führungsabschnitt 52 mit radialem Abstand von der ringförmigen Spule 43 umrahmt. Mit anderen Worten sind der Führungsabschnitt 52 und die Spule 43 konzentrisch zueinander angeordnet, wobei sich zwischen ihnen ein Ringspalt 53 befindet, der axial einerseits von der Tragplatte 47 begrenzt und an der gegenüberliegenden Axialseite offen ist. In diesen Ringspalt 53 taucht ein hohlzylindrischer Wandabschnitt 54 der Permanentmagneteinheit 22a ein, der quasi eine ring- oder hülsenförmige Zwischenwand zwischen der Führungsdurchbrechung 48 und der Eintauchausnehmung 42 bildet.

An der der Tragplatte 47 entgegengesetzten, der Ventilkammer 27 zugewandten vorderen Stirnseite 55 des Führungsabschnittes 52 ist das Verschlussmittel 34 angeordnet. Das Verschlussmittel 34 ist mit dem säulenförmigen Führungsabschnitt 52 zweckmäßigerweise zu einer Baueinheit zusammengefasst, so dass es die Antriebsbewegung 39 jeweils unmittelbar mitmacht.

Das Verschlussmittel 34 kann prinzipiell unmittelbar vom freien Endabschnitt des Führungsabschnittes 52 gebildet sein. Vorzugsweise handelt es sich bei dem Verschlussmittel 34 jedoch um ein bezüglich des Spulenträgers 46 gesondertes Dichtelement 34a, das an den Führungsabschnitt 52 angeklebt oder auf sonstige Weise an dem Führungsabschnitt 52 befestigt ist.

Der Führungsabschnitt 52 ist innerhalb der Führungsdurchbrechung 48 von der Permanentmagneteinheit 22a in axial beweglicher Weise radial abgestützt. Mit anderen Worten ist der Führungsabschnitt 52 von der Permanentmagneteinheit 22a auf diese Weise linear verschiebbar geführt. Die Antriebsbewegung 39 ist mithin eine exakte Linearbewegung.

Zur Realisierung der Führungsfunktion bildet die die Führungsdurchbrechung 48 peripher begrenzende Begrenzungsfläche 56, die von der Permanentmagneteinheit 22a gebildet ist, eine äußere Führungsfläche 56a, die vorzugsweise eine hohlzylindrische Form hat. Außerdem bildet die Außenumfangsfläche 57 des Führungsabschnittes 52 eine der äußeren Führungsfläche 56a zugewandte innere Führungsfläche 57a, die gleitverschieblich an der äußeren Führungsfläche 56a anliegt. Dadurch kann sich der Führungsabschnitt 52 einschließlich der gesamten Spuleneinheit 23b verkippungssicher relativ zu der Permanentmagneteinheit 22a linear bewegen.

Wird die Spule 43 bestromt, was exemplarisch unter Verwendung der Anschlusskabel 45 geschieht, ergibt sich eine Interaktion des Stromflusses in der Spule 43 mit dem Magnetfeld 38 des Permanentmagneten 37, was aufgrund der dabei generierten sogenannten Lorentzkraft zur Folge hat, dass sich die Spule 43 und mit ihr die gesamte Spuleneinheit 23b unter Ausführung der Antriebsbewegung 39 relativ zur stationären Permanentmagneteinheit 22a bewegt. Die Bewegungsrichtung hängt von der Stromflussrichtung in der Spule 43 aus. Dementsprechend kann durch entsprechende Bestromung der Spule 43 das Verschlussmittel 34 wunschgemäß in Bezug auf den Ventilsitz 33 variabel positioniert werden.

Für die Ausbildung von Antriebskräften ist bei dieser Art von Antriebseinrichtung 22, die auf der Ausnutzung der Lorentzkraft basiert, von wesentlicher Bedeutung, dass in dem magnetischen Kreis, der von der Permanentmagneteinheit 22a bestimmt wird, elektrische Leiter der Spule 43 derart angeordnet werden, dass ein Stromfluss in der Spule 43 senkrecht zum magnetischen Fluss gerichtet ist. Dadurch ist dann die aus der Wechselwirkung von magnetischem Fluss und Stromfluss resultierende Lorentzkraft in der gewünschten Bewegungsrichtung orientiert und kann die Antriebsbewegung 39 hervorrufen.

Das elektrodynamische Antriebsprinzip ermöglicht eine hochdynamische Antriebsbewegung 39. Die Präzision dieser Antriebsbewegung 39 wird durch die bezüglich der Permanentmagneteinheit 22a stattfindende Linearführung der Spuleneinheit 23b unterstützt. Vorteilhaft ist weiterhin, dass die Spule 43 zweckmäßigerweise nach Art einer Luftspule ausgeführt ist und keinen weichmagnetischen Kern hat, so dass sie eine sehr geringe Induktivität hat.

Die Permanentmagneteinheit 22a ist so ausgebildet, dass das von dem mindestens einen Permanentmagnet 37 erzeugte Magnetfeld 38 die Eintauchausnehmung 42 und folglich auch die darin eintauchende Spule 43 durchquert. Um dies zu begünstigen, enthält die Permanentmagneteinheit 22a beim Ausführungsbeispiel einen hutförmigen Eisenkern 58 mit einer ringscheibenförmigen Basisplatte 58a und einem dazu koaxialen hülsenförmigen Zentralabschnitt 58b. Letzterer ist mit der Basisplatte 58a vorzugsweise einstückig ausgebildet und definiert zugleich den oben erwähnten hohlzylindrischen Wandabschnitt 54.

Mit der Basisplatte 58a stützt sich der Eisenkern 58 an der Bodenwand 24 ab, von der zu diesem Zweck ein bevorzugt ringförmiger Abstützvorsprung 62 der Permanentmagneteinheit 22a entgegenragt, auf dem der Eisenkern 58 aufsitzt. Auf diese Weise verbleibt zwischen der Permanentmagneteinheit 22a und der Bodenwand 24 ein die Ventilkammer 27 definierender Abstand.

Der Zentralabschnitt 58b ragt ausgehend von der Basisplatte 58a in Richtung zu der Antriebskammer 28 und taucht in den Ringspalt 53 der Spuleneinheit 23b ein.

Mit radialem Abstand zu dem Zentralabschnitt 58b liegt an der nach oben weisenden Stirnfläche der Basisplatte 58a der ringförmige Permanentmagnet 37 an, auf dem an der der Antriebskammer 28 zugewandten Oberseite ein ringförmiges Rückschlusselement 63 der Permanentmagneteinheit 22a angeordnet ist. Das Rückschlusselement 63 besteht wie der Eisenkern 58 aus einem ferromagnetischen Material, das das Magnetfeld 38 des Permanentmagneten 37 optimal leitet.

Die Permanentmagneteinheit 22a ist zweckmäßigerweise dadurch axial unbeweglich in dem Aufnahmeraum 18 angeordnet, dass der Gehäusedeckel 17b von oben her an dem Rückschlusselement 63 anliegt und dadurch die gesamte Permanentmagneteinheit 22a an den von der Bodenwand 24 wegragenden Abstützvorsprung 62 andrückt.

Die Ventileinheit 2 ist zweckmäßigerweise mit Federmitteln 64 ausgestattet, die die Spuleneinheit 23b ständig in Richtung einer Grundstellung vorspannen. Diese Grundstellung entspricht beim Ausführungsbeispiel der Schließstellung des Verschlussmittels 34. Im elektrisch deaktivierten Zustand der Antriebseinrichtung 22 wird daher das Verschlussmittel 34 durch die federbeaufschlagte Spuleneinheit 23b unter Einnahme der Schließstellung an den Ventilsitz 33 angedrückt.

In Abhängigkeit von der Stromstärke, mit der die Spule 43 beaufschlagt wird, lässt sich eine unterschiedlich hohe Lorentzkraft hervorrufen, um die Spuleneinheit 23b und mithin das Verschlussmittel 34 in eine gewünschte Offenstellung zu bewegen.

In dem Spulenträger 46 ist zweckmäßigerweise eine zentrale Ausnehmung 65 ausgebildet, die an der axial von der Permanentmagneteinheit 22a wegweisenden oberen Stirnfläche 66 des Spulenträgers 46 ausmündet und die sich ausgehend von der oberen Stirnfläche 66 zweckmäßigerweise in den säulenförmigen Führungsabschnitt 52 hinein erstreckt. Diese zentrale Ausnehmung 65 ermöglicht die Aufnahme einer die Federmittel bildenden Schraubendruckfeder. Darüber hinaus reduziert sie auch das Gewicht des Spulenträgers 46 und begünstigt folglich die Dynamik der Antriebsbewegung 39.

Beim Ausführungsbeispiel wird die zentrale Ausnehmung 65 nicht zur Aufnahme von Federmitteln genutzt. Hier bestehen die Federmittel 64 in vorteilhafter Weise aus einer flachen Blattfeder 67, die in der Antriebskammer 28 angeordnet ist und die sich zweckmäßigerweise ausschließlich in dieser Antriebskammer 28 erstreckt. Die Blattfeder 67 hat eine Hauptausdehnungsebene und ist so ausgerichtet, dass diese Hauptausdehnungsebene rechtwinkelig zur Längsachse 36 der Permanentmagneteinheit 22a verläuft.

Bevorzugt hat die Blattfeder 67 eine längliche Gestalt. Sie hat eine Längsachse 68 und ist mit quer und insbesondere rechtwinkelig zur Längsachse 36 der Permanentmagneteinheit 22a ausgerichteter Längsachse 68 in der Antriebskammer 28 des Aufnahmeraums 18 platziert.

Die Blattfeder 67 stützt sich zum einen am Spulenträger 46 ab und zum anderen am Ventilgehäuse 17. Die Abstützung bezüglich des Ventilgehäuses 17 kann direkt erfolgen, findet vorzugsweise aber indirekt unter Zwischenschaltung von Einstellmitteln 72 statt, die ausgebildet sind, um eine variable Vorgabe der Federvorspannung der exemplarisch von der Blattfeder 67 gebildeten Federmittel 64 zu ermöglichen.

Bei dem bevorzugten Ausführungsbeispiel hat die Blattfeder 67 zwei einander entgegengesetzte, in Achsrichtung der Längsachse 68 orientierte Endabschnitte 73a, 73b. Mit diesen zueinander beabstandeten Endabschnitten 73a, 73b stützt sich die Blattfeder 67 an der von der Permanentmagneteinheit 22a axial abgewandten oberen Stirnfläche 66 des Spulenträgers 46 ab, und zwar insbesondere an der Tragplatte 47. Die Blattfeder 67 überspannt zweckmäßigerweise den Spulenträger 46 und liegt lediglich mit ihren beiden Endabschnitten 73a, 73b am Spulenträger 46 an.

Der Spulenträger 46 hat eine zur Längsachse 36 der Permanentmagneteinheit 22a parallele und mit dieser Längsachse 36 bevorzugt zusammenfallende Längsachse 74. In sich bezüglich der Längsachse 74 diametral gegenüberliegenden Randbereichen der Tragplatte 47 weist der Spulenträger 46 zweckmäßigerweise jeweils einen ein Stück weit der Außenkontur der bevorzugt scheibenförmig ausgebildeten Tragplatte 47 folgenden und nach oben von der Permanentmagneteinheit 22a abstehenden Haltevorsprung 75a, 75b auf, der an seiner Oberseite mit einer Aufnahmeaussparung 76 versehen ist, die jeweils einen der Endabschnitte 73a, 73b der Blattfeder 67 aufnimmt, so dass selbige bezüglich der Längsachse 74 unverdrehbar am Spulenträger 46 fixiert ist. Die Blattfeder 67 liegt mit ihren Endabschnitten 73a, 73b auf der Grundfläche der Aufnahmeaussparungen 76 auf.

Ein zwischen den beiden Endabschnitten 73a, 73b liegender Bereich der Blattfeder 67, dessen Abstand zu den beiden Endabschnitten 73a, 73b zweckmäßigerweise gleich groß ist, bildet einen federseitigen Abstützabschnitt 77, mit dem sich die Blattfeder 67 bezüglich dem Ventilgehäuse 17 in Achsrichtung der Längsachse 74 abstützt. Exemplarisch stützt sich der federseitige Abstützabschnitt 77 an den Einstellmitteln 72 ab, die sich ihrerseits, wiederum in Achsrichtung der Längsachse 74, am Ventilgehäuse 17 abstützen.

Die Einstellmittel 72 enthalten zweckmäßigerweise ein in sich starres Einstellelement 78, das in der Antriebskammer 28 zwischen der Blattfeder 67 und der die Antriebskammer 28 an der der Permanentmagneteinheit 22a axial gegenüberliegenden Seite begrenzenden Gehäusewand 81 des Ventilgehäuses 17 angeordnet ist. Diese im Folgenden zur besseren Unterscheidung auch als obere Gehäusewand 81 bezeichnete Gehäusewand ist es vorzugsweise ein Bestandteil des Gehäusedeckels 17b. Das Einstellelement 78 hat einen ersten Abstützabschnitt 83, mit dem sie von innen her an der Gehäusewand 81 anliegt, und verfügt au-βerdem über einen diesbezüglich beabstandeten zweiten Abstützabschnitt 84, an dem die Blattfeder 67 mit ihrem federseitigen Abstützabschnitt 77 anliegt.

Der erste Abstützabschnitt 83 ist bevorzugt ringförmig ausgebildet und koaxial zu der Hauptachse 15 ausgerichtet. Der zweite Abstützabschnitt 84 ist Bestandteil eines stegförmigen Abschnittes 84a des Einstellelementes 78, der die von dem ringförmigen ersten Abstützabschnitt 83 umrahmte Ringöffnung 85 überquert, wobei er mit seinen beiden Endabschnitten in einander diametral gegenüberliegenden Bereichen an dem ringförmigen ersten Abstützabschnitt 83 befestigt ist. Das Einstellelement 78 ist zweckmäßigerweise ein einstückiges Bauteil, das bevorzugt aus Metall besteht und das insbesondere ein Stanzteil ist.

Das Einstellelement 78 weist einen dauerhaft plastisch verformbaren Einstellabschnitt 86 auf, der so ausgebildet ist, dass seine plastische Verformung eine dauerhafte Lageveränderung zwischen dem ersten Abstützabschnitt 83 und dem zweiten Abstützabschnitt 84 in der Achsrichtung der Längsachse 36 der Permanentmagneteinheit 22a hervorruft. Dies führt letztlich zu einer Lageveränderung des an dem federseitigen Abstützabschnitt 77 anliegenden zweiten Abstützabschnittes 84 relativ zu der Permanentmagneteinheit 22a in der Richtung der Antriebsbewegung 39. Auf diese Weise kann die Vorspannung der Blattfeder 67 nach Bedarf und insbesondere auch reproduzierbar eingestellt werden.

Es ist vorteilhaft, wenn der mit den Federmitteln 64 zusammenwirkende zweite Abstützabschnitt 84 des Einstellelementes 78, der beim Ausführungsbeispiel von dem stegförmigen Abschnitt 84a gebildet ist, unmittelbar von dem plastisch verformbaren Einstellabschnitt 86 gebildet ist. Dies trifft auf das Ausführungsbeispiel zu.

Die plastische Verformung könnte beispielsweise durch mechanische Einwirkung hervorgerufen werden. Als besonders zweckmäßig wird allerdings eine Verformung durch Wärmeeinwirkung angesehen. Insofern ist der Einstellabschnitt 86 durch Wärmeeintrag plastisch verformbar ausgebildet. Der Wärmeeintrag geschieht insbesondere durch eine Laserbestrahlung, und zwar im bereits zusammengebauten Zustand der Ventileinheit 2.

Die obere Gehäusewand 81 hat eine dem Einstellabschnitt 86 in Achsrichtung der Hauptachse 15 gegenüberliegende Wanddurchbrechung 87, die im Betrieb der Ventileinheit 2 durch ein Verschlusselement 88, das transparent ausgebildet sein kann, dicht verschlossen. Der Energieeintrag in den Einstellabschnitt 86 mittels Laserbestrahlung erfolgt bei entferntem Verschlusselement 88 durch die dann offene Wanddurchbrechung 87 hindurch.

In der Zeichnung ist der Einstellabschnitt 86 bereits in der gewünschten Weise plastisch verformt. Zu erkennen ist dies an einem in Richtung zu den Federmitteln 64 gebogenen Längsverlauf des als Einstellabschnitt 86 fungierenden stegförmigen Abschnittes 84a des Einstellelementes 86.

Bei einem nicht gezeigten Ausführungsbeispiel besteht das Einstellmittel 72 aus einer in ein Innengewinde der Wanddurchbrechung 87 eingeschraubten Einstellschraube, die mit einer Stirnseite auf den federseitigen Abstützabschnitt 77 der Blattfeder 67 oder eines andersartigen Federmittels 64 einwirkt. Die Einstellschraube kann mehr oder weniger weit eingeschraubt werden, um die Federvorspannung zu variieren und nach Bedarf vorzugeben.

Die Blattfeder 67 ist zweckmäßigerweise mäanderförmig gestaltet. Mit dieser Formgebung lässt sich besonders präzise eine gewünschte Federrate vorgeben. Dies ist deshalb von Bedeutung, weil die Federrate Einfluss auf die Eigenfrequenz und somit die Dynamik des Systems hat und ferner die Steigung der Ventilkennlinie, die Justierbarkeit der Federvorspannung und die Empfindlichkeit gegen Toleranzen und Temperaturänderungen beeinflusst.

Die mäanderförmig strukturierte Blattfeder 67 hat beim Ausführungsbeispiel drei sich mit gleicher Längsausrichtung nebeneinander erstreckende Federschenkel 89, und zwar einen inneren Federschenkel 89c, der von zwei äußeren Federschenkeln 89a, 89b flankiert ist. Der innere Federschenkel 89c ist einenends über einen ersten Verbindungsabschnitt 90a mit dem einen äußeren Federschenkel 89a verbunden und ist andernends über einen zweiten Verbindungsabschnitt 90b mit dem zweiten äußeren Federschenkel 89b verbunden. Jeder der äußeren Federschenkel 89a, 89b geht in einen der oben bereits erwähnten Endabschnitte 73a, 73b über, die jeweils die Form eines sich in der Blattfederebene quer zu der Längsachse 68 erstreckenden und frei endenden Schenkelabschnittes haben. Bevorzugt sind diese schenkeiförmigen Endabschnitte 73a, 73b entsprechend der Außenkontur der bevorzugt kreisförmig konturierten Tragplatte 47 gebogen. Jeder Endabschnitt 73a, 73b ragt ausgehend vom zugeordneten äußeren Federschenkel 89a, 89b quer zu der Längsachse 68 in Richtung zu den anderen Schenkeln. Auf diese Weise nimmt die Blattfeder 87 insgesamt sehr wenig Einbauraum in Anspruch. Der federseitige Abstützabschnitt 77 ist vorzugsweise von dem inneren Federschenkel 89c gebildet. Alle Federschenkel 89 können sich unabhängig voneinander in der Richtung der Antriebsbewegung 39 durchbiegen.

Die Blattfeder 67 ist bevorzugt ein einstückiges Bauteil und besteht insbesondere aus Metall mit federnden Eigenschaften.

Bei einem nicht gezeigten Ausführungsbeispiel enthält die Mäanderstruktur der Blattfeder 67 mehr als drei Federschenkel 89. Bei einem ebenfalls nicht gezeigten Ausführungsbeispiel besteht die Blattfeder aus einem einzigen, den Spulenträger 46 überspannenden Federblatt.

Es ist vorteilhaft, wenn die Spuleneinheit 23b verdrehgesichert im Ventilgehäuse 17 angeordnet ist. Dadurch ist insbesondere auch ein optimales Zusammenwirken der Federmittel 64 mit den Einstellmitteln 62 und vor allem mit dem zweiten Abstützabschnitt 84 gewährleistet. Beim Ausführungsbeispiel ist eine solche Verdrehsicherung dadurch realisiert, dass am Au-βenumfang der Tragplatte 47 des Spulenträgers 46 an in der Umfangsrichtung zueinander beabstandeten und insbesondere einander diametral gegenüberliegenden Bereichen jeweils ein Verdrehsicherungsvorsprung 91 ausgebildet ist, der in eine sich in der Richtung der Antriebsbewegung 39 erstreckende Verdrehsicherungsnut 92 eingreift, die an der dem Aufnahmeraum 18 zugewandten Innenfläche der Wandung des Ventilgehäuses 17 ausgebildet ist. Exemplarisch sind die Verdrehsicherungsnuten 92 in dem Gehäusedeckel 17b ausgebildet.

Es ist vorteilhaft, wenn in der Antriebskammer 28 stets der gleiche Druck herrscht wie in der Ventilkammer 27. Auf diese Weise ist die sich aus der Spuleneinheit 23b und dem Verschlussmittel 34 zusammensetzende Baueinheit in axialer Richtung druckausgeglichen, d.h. die daran in axialer Richtung angreifenden fluidischen Druckkräfte sind zumindest annähernd gleich Null. Auf diese Weise wirkt sich die Höhe des in der Ventilkammer 27 anstehenden Fluiddruckes nicht nachteilig auf das Bewegungsverhalten der Spuleneinheit 23b aus und die Spuleneinheit 23b lässt sich mit relativ geringen Betätigungskräften bewegen.

Um diese Druckkraftkompensation zu erhalten, ist zwischen der Ventilkammer 27 und der Antriebskammer 28 eine von der Position der Spuleneinheit 23b und des Verschlussmittels 34 unabhängige ständige Fluidverbindung gegeben. Dies ist bevorzugt durch die sowieso vorhandene Führungsdurchbrechung 48 hindurch realisiert.

Beim Ausführungsbeispiel hat hierzu die radial nach außen weisende periphere Außenkontur des säulenförmigen Führungsabschnittes 52, also die Querschnittskontur der zugeordneten Außenumfangsfläche 57, eine derart auf die Innenkontur der Führungsdurchbrechung 48, also die Kontur der Begrenzungsfläche 56 abgestimmte Gestaltung, das radial zwischen der Außenumfangsfläche 57 und der Begrenzungsfläche 56 mindestens ein Fluidübertrittskanal 93 definiert ist, der sich axial durch die Führungsdurchbrechung 48 hindurch erstreckt. Dieser mindestens eine Fluidübertrittskanal 93 kommuniziert einenends mit der Ventilkammer 27 und andernends mit der Antriebskammer 28, so dass die beiden Kammern 27, 28 ständig fluidisch miteinander verbunden sind.

Die Ventileinheit 2 des Ausführungsbeispiels ist mit mehreren rings um den Außenumfang des Führungsabschnittes 52 mit Abstand verteilt zueinander angeordneten Fluidübertrittskanälen 93 ausgestattet. Jeder dieser Fluidübertrittskanäle 93 ist zweckmäßigerweise unter Mitwirkung einer in der Außenumfangsfläche 57 des Führungsabschnittes 52 ausgebildeten Längsnut 93a realisiert. Jede dieser mehreren Längsnuten 93a definiert gemeinsam mit dem sie überdeckenden Abschnitt der Begrenzungsfläche 56 einen Fluidübertrittskanal 93. Es versteht sich, dass auch nur eine einzige Längsnut 93a vorhanden sein kann, um lediglich einen einzigen Fluidübertrittskanal 93 zu bilden.

Für die angestrebte Linearführung der Spuleneinheit 23b bezüglich der Permanentmagneteinheit 22a sind diejenigen Flächenabschnitte der Außenumfangsfläche 57 verantwortlich, die zwischen in der Umfangsrichtung benachbarten Längsnuten 93a liegen. Sie bilden gemeinsam die innere Führungsfläche 57a. Folglich setzt sich hier die innere Führungsfläche 57a aus mehreren streifenförmigen Einzelflächen zusammen, die sich zwischen den jeweils benachbarten Längsnuten 93a befinden.

Aufgrund der sehr flach bauenden Antriebseinrichtung 22 und der ebenfalls nur wenig Platz beanspruchenden Federmittel 64 und Einstellmittel 72 ist einerseits eine sehr kompakte Ventileinheit 2 realisierbar und kann das Totraumvolumen innerhalb des Aufnahmeraumes 18 auf ein Minimum reduziert werden. Beim Ausführungsbeispiel wird dies auch noch dadurch begünstigt, dass der hutförmige Eisenkern 58 im Übergangsbereich zwischen der Basisplatte 58a und dem Zentralabschnitt 58b an der der Spule 43 zugewandten Seite eine ringförmige Abstufung 94 aufweist, die unnötige Leerräume vermeidet. Die ringförmige Abstufung 94 begrenzt die Eintauchausnehmung 42 axial innen, deren Länge somit auf das für die Antriebsbewegung 39 erforderliche Mindestmaß begrenzt werden kann.

Das geringe Totraumvolumen im Aufnahmeraum 18 reduziert das bei der Betätigung der Ventileinheit 2 abwechselnd zu befüllende und zu entleerende Volumen, was der Dynamik des Umschaltverhaltens der Spuleneinheit 23b zugute kommt.

Ein vorteilhafter Anwendungsfall für die Ventilanordnung 1 ist die Nutzung als Vorsteuerventil für ein pneumatisch betätigbares Hauptventil. Es lässt sich mit relativ geringen Ansteuerspannungen betreiben und zeichnet sich durch eine relativ geringe Leistungsaufnahme aus. Durch die beim Ausführungsbeispiel vorgesehenen Justagemöglichkeiten bezüglich der Federmittel 64 können Ventileinheiten der beschriebenen Art in der Fertigung sehr einfach auf einen gleichen Kennlinienverlauf abgestimmt werden. Das Ventilgehäuse 17 besteht zweckmäßigerweise aus einem nicht magnetisierbaren Material. Bevorzugt ist es aus einem Kunststoffmaterial gefertigt.

## Patentansprüche

1. Ventilanordnung, mit mindestens einer elektrisch betätigbaren Ventileinheit (2), die eine in einem Ventilgehäuse (17) angeordnete elektrodynamische Antriebseinrichtung (22) aufweist, die über eine bezüglich dem Ventilgehäuse (17) ortsfeste und mindestens einen Permanentmagnet (37) enthaltende ringförmige Permanentmagneteinheit (22a) und eine Spuleneinheit (23b) mit einer ebenfalls ringförmigen, koaxial in die ringförmige Permanentmagneteinheit (22a) eintauchenden Spule (43) verfügt, wobei die Spule (43) elektrisch bestrombar ist, um die Spuleneinheit (23b) relativ zu der Permanentmagneteinheit (22a) zu einer Antriebsbewegung (35) anzutreiben, wobei die Ventileinheit (2) ferner ein Verschlussmittel (34) aufweist, das einem einem Ventilkanal (6, 6a) zugeordneten Ventilsitz (33) gegenüberliegt und das derart mit einem die Spule (43) tragenden Spulenträger (46) der Spuleneinheit (23b) bewegungsgekoppelt ist, dass es durch die Antriebsbewegung (39) der Spuleneinheit (23b) relativ zu dem Ventilsitz (33) positionierbar ist, um den zugeordneten Ventilkanal (6, 6a) wahlweise abzusperren oder freizugeben, wobei die ringförmige Permanentmagneteinheit (22a) eine mittige axiale Führungsdurchbrechung (48) aufweist, in die der Spulenträger (46) der Spuleneinheit (23b) mit einem von der Spule (43) umrahmten säulenförmigen Führungsabschnitt (52) linear verschiebbar geführt axial eintaucht, wobei das dem Ventilsitz (33) des Ventilkanals (6, 6a) zugeordnete Verschlussmittel (34) an dem Führungsabschnitt (52) angeordnet ist, **dadurch gekennzeichnet, dass** die periphere Außenkontur des Führungsabschnittes (52) und die Innenkontur der Führungsdurchbrechung (48) so aufeinander abgestimmt sind, dass sie gemeinsam mindestens einen axial beidseits offenen Fluidübertrittskanal (93) definieren, der die auf einander axial entgegengesetzten Seiten der Permanentmagneteinheit (22a) befindlichen Bereiche eines die Spuleneinheit (23b) aufnehmenden Aufnahmeraumes (18) des Ventilgehäuses (17) ständig fluidisch miteinander verbindet.

2. Ventilanordnung nach Anspruch 1, **dadurch gekennzeichnet, dass** das Verschlussmittel (34) stirnseitig an dem Führungsabschnitt (52) angeordnet ist.

3. Ventilanordnung nach Anspruch 1 oder 2, **dadurch gekennzeichnet, dass** das Verschlussmittel (34) mit dem Führungsabschnitt (52) des Spulenträgers (46) zu einer Baueinheit zusammengefasst ist, wobei es zweckmäßigerweise von einem stirnseitig an dem Führungsabschnitt (52) befestigten separaten Dichtelement (34a) gebildet ist.

4. Ventilanordnung nach einem der Ansprüche 1 bis 3, **dadurch gekennzeichnet, dass** der Aufnahmeraum (18) zur Umgebung hin abgeschlossen ist und die elektrodynamische Antriebseinrichtung (22) aufnimmt, wobei er durch die Permanentmagneteinheit (22a) in eine Ventilkammer (27), in die der dem Verschlussmittel (34) zugeordnete Ventilkanal (6, 6a) einmündet und eine axial entgegengesetzte, die Spule (43) aufnehmende Antriebskammer (28) unterteilt ist, wobei sich die Führungsdurchbrechung (48) zwischen der Ventilkammer (27) und der Antriebskammer (28) erstreckt und der Führungsabschnitt (52) von der Antriebskammer (28) her in die Führungsdurchbrechung (48) eintaucht und an seiner der Ventilkammer (27) zugewandten Stirnseite das Verschlussmittel (34) aufweist.

5. Ventilanordnung nach einem der Ansprüche 1 bis 4, **dadurch gekennzeichnet, dass** der Spulenträger (46) eine zur Permanentmagneteinheit (22a) axial beabstandete und zweckmäßigerweise scheibenförmig ausgebildete Tragplatte (47) aufweist, an der die Spule (43) befestigt ist und von der der säulenförmige Führungsabschnitt (52) axial wegragt, wobei der Führungsabschnitt (52) zweckmäßigerweise einstückig mit der Tragplatte (47) ausgebildet ist.

6. Ventilanordnung nach einem der Ansprüche 1 bis 5, **dadurch gekennzeichnet, dass** der mindestens eine Fluidübertrittskanal (93) unter Mitwirkung mindestens einer in der Außenumfangsfläche (57) des Führungsabschnittes (52) ausgebildeten Längsnut (93a) gebildet ist.

7. Ventilanordnung nach einem der Ansprüche 1 bis 6, **dadurch gekennzeichnet, dass** die ringförmige Permanentmagneteinheit (22a) eine axial offene ringförmige Eintauchausnehmung (42) aufweist, in die die Spule (43) axial eintaucht und die radial innen von einem hohlzylindrischen Wandabschnitt (54) der Permanentmagneteinheit (22a) begrenzt ist, durch den hindurch sich die Führungsdurchbrechung (48) erstreckt.

8. Ventilanordnung nach einem der Ansprüche 1 bis 7, **dadurch gekennzeichnet, dass** die Spuleneinheit (23b) durch Federmittel (64) der Ventileinheit (2) axial in eine Grundstellung vorgespannt ist, in der das Verschlussmittel (34) zweckmäßigerweise eine an dem ihm zugeordneten Ventilsitz (33) anliegende Schließstellung einnimmt.

9. Ventilanordnung nach Anspruch 8, **dadurch gekennzeichnet, dass** die Federmittel (64) eine quer zur Richtung der Antriebsbewegung (39) der Spuleneinheit (23b) ausgerichtete Blattfeder (67) aufweisen, die sich einerseits an der Spuleneinheit (23b) und andererseits bezüglich dem Ventilgehäuse (17) abstützt.

10. Ventilanordnung nach Anspruch 9, **dadurch gekennzeichnet, dass** das Ventilgehäuse (17) einen Aufnahmeraum (18) definiert, in dem die elektrodynamische Antriebseinrichtung (22) aufgenommen ist, wobei der Aufnahmeraum (18) von der Permanentmagneteinheit (22a) in eine Ventilkammer (27), in die der dem Verschlussmittel (34) zugeordnete Ventilkanal (6, 6a) einmündet, und in eine axial entgegengesetzte Antriebskammer (28), in der die Spule (43) angeordnet ist, unterteilt ist, wobei die Blattfeder (67) ausschließlich in der Antriebskammer (28) angeordnet ist.

11. Ventilordnung nach Anspruch 9 oder 10, **dadurch gekennzeichnet, dass** die Blattfeder (67) mäanderförmig strukturiert ist und mindestens drei sich nebeneinander erstreckende Federschenkel (89) aufweist, wobei sie sich mittels ihren beiden äußeren Federschenkeln (89, 89a, 89b) an der Spuleneinheit (23b) und mit mindestens einem zwischen den beiden äußeren Federschenkeln (89, 89a, 89b) liegenden inneren Federschenkel (89, 89c) bezüglich dem Ventilgehäuse (17) abstützt.

12. Ventilanordnung nach einem der Ansprüche 8 bis 11, **dadurch gekennzeichnet, dass** die Ventileinheit (2) über Einstellmittel (72) zur variablen Vorgabe der Federvorspannung der Federmittel (64) verfügt.

13. Ventilanordnung nach Anspruch 12, **dadurch gekennzeichnet, dass** die Einstellmittel (72) ein sich einerseits am Ventilgehäuse (17) und andererseits an den Federmitteln (64) abstützendes starres Einstellelement (78) enthalten, das mindestens einen plastisch verformbaren Einstellabschnitt (86) aufweist, dessen plastische Verformung eine dauerhafte Lageveränderung eines die Federmittel (64) abstützenden Abstützabschnittes (84) bezüglich des Ventilgehäuses (17) in der axialen Richtung der Permanentmagneteinheit (22a) bewirkt, wobei der Einstellabschnitt (86) zweckmäßigerweise zur plastischen Verformung mittels Laserstrahlenergie ausgebildet ist.

14. Ventilanordnung nach Anspruch 13, **dadurch gekennzeichnet, dass** das Einstellelement (78) einen sich am Ventilgehäuse (17) abstützenden ringförmigen Abstützabschnitt (83) und einen die Ringöffnung (85) des ringförmigen Abstützabschnittes (83) überquerenden Stegabschnitt (84a) aufweist, wobei dieser Stegabschnitt (84a) den die Federmittel (64) abstützenden Abstützabschnitt (84) und zugleich den plastisch verformbaren Einstellabschnitt (86) bildet und wobei das Einstellelement (78) insbesondere von einem aus Metall bestehenden Stanzteil gebildet ist.

15. Ventilanordnung nach einem der Ansprüche 1 bis 14, **dadurch gekennzeichnet, dass** der Ventilkanal (6, 6a), dem der mit dem Verschlussmittel (34) kooperierende Ventilsitz (33) zugeordnet ist, in eine Ventilkammer (27) der Ventileinheit (2) einmündet, in die außerdem auch noch ein durch das Verschlussmittel (84) nicht steuerbarer weiterer Ventilkanal (6, 6b) einmündet, wobei die beiden Ventilkanäle (6, 6a, 6b) in Abhängigkeit von der Position des Verschlussmittels (34) fluidisch miteinander verbindbar oder voneinander abtrennbar sind, insbesondere derart, dass die Ventileinheit (2) als 2/2-Wegeventil betreibbar ist, und/oder dass die Ventilanordnung (1) einen bezüglich der Ventileinheit (2) gesonderten Anschlusskörper (3) aufweist, in den die Ventileinheit (2) mit zumindest einem Abschnitt ihres Ventilgehäuses (17) - insbesondere patronenartig - eingesetzt ist und der von mehreren Anschlusskanälen (7) durchsetzt ist, die jeweils mit einem Ventilkanal (6) der Ventileinheit (2) kommunizieren.

## Claims

1. Valve assembly comprising at least one electrically actuable valve unit (2), which has an electrodynamic drive device (22), which is located in a valve housing (17) and is provided with an annular permanent magnet unit (22a), which is stationary relative to the valve housing (17) and contains at least one permanent magnet (37), and a coil unit (23b) with a likewise annular coil (43) dipping coaxially into the annular permanent magnet unit (22a), wherein the coil (43) can be energised electrically in order to cause the coil unit (23b) to perform a drive movement (35) relative to the permanent magnet unit (22a), wherein the valve unit (2) further has a closing means (34), which is located opposite a valve seat (33) assigned to a valve passage (6, 6a) and is motion-coupled to a coil support (46) of the coil unit (23b) which carries the coil (43) in such a way that it can be positioned relative to the valve seat (33) by the drive movement (39) of the coil unit (23b) in order to optionally close or open the associated valve passage (6, 6a), wherein the annular permanent magnet unit (22a) has a central axial guide aperture (48), into which the coil support (46) of the coil unit (23b) dips axially with a columnar guide section (52) framed by the coil (43) while being guided in a linearly displaceable manner, wherein the closing means (34) assigned to the valve seat (33) of the valve passage (6, 6a) is located on the guide section (52), **characterised in that** the peripheral external contour of the guide section (52) and the internal contour of the guide aperture (48) are matched to each other in such a way that they jointly define at least one fluid crossover passage (93), which is axially open on both sides and which constantly connects fluidically those regions of an accommodation chamber (18) of the valve housing (17) accommodating the coil unit (23b) which are located on axially opposite sides of the permanent magnet unit (22a) to each other.

2. Valve assembly according to claim 1, **characterised in that** the closing means (34) is located at the end face of the guide section (52).

3. Valve assembly according to claim 1 or 2, **characterised in that** the closing means (34) is combined with the guide section (52) of the coil support (46) to form a modular unit, being expediently represented by a separate sealing element (34a) mounted at the end face of the guide section (52).

4. Valve assembly according to any of claims 1 to 3, **characterised in that** the accommodation chamber (18) is closed towards the environment and accommodates the electrodynamic drive device (22), wherein it is divided by the permanent magnet unit (22a) into a valve chamber (27) into which the valve passage (6, 6a) assigned to the closing means (34) terminates and a drive chamber (28) located axially opposite and accommodating the coil (43), wherein the guide aperture (48) extends between the valve chamber (27) and the drive chamber (28) and the guide section (52) dips from the drive chamber (28) into the guide aperture (48) and has the closing means (34) at its end face facing the valve chamber (27).

5. Valve assembly according to any of claims 1 to 4, **characterised in that** the coil support (46) has a support plate (47), which is located at an axial distance from the permanent magnet unit (22a) and is expediently disc-shaped, and from which the columnar guide section (52) projects axially, the guide section (52) being expediently designed in one piece with the support plate (47).

6. Valve assembly according to any of claims 1 to 5, **characterised in that** the at least one fluid crossover passage (93) is formed with the collaboration of at least one longitudinal groove (93a) formed in the outer circumferential surface (57) of the guide section (52).

7. Valve assembly according to any of claims 1 to 6, **characterised in that** the annular permanent magnet unit (22a) has an axially open annular dipping-in recess (42), into which the coil (43) dips axially and which is radially on the inside bounded by a hollow-cylindrical wall section (54) of the permanent magnet unit (22a), through which the guide aperture (48) extends.

8. Valve assembly according to any of claims 1 to 7, **characterised in that** the coil unit (23a) is preloaded axially by spring means (64) of the valve unit (2) into a home position in which the closing means (34) expediently adopts a closing position bearing against the associated valves seat (33).

9. Valve assembly according to claim 8, **characterised in that** the spring means (64) comprise a leaf spring (67), which is oriented transversely to the drive movement (39) of the coil unit (23b) and which is supported on the coil unit (23b) on one side and in respect of the valve housing (17) on the other side.

10. Valve assembly according to claim 9, **characterised in that** the valve housing (17) defines an accommodation chamber (18), in which the electrodynamic drive device (22) is accommodated, wherein the accommodation chamber (18) is divided by the permanent magnet unit (22a) into a valve chamber (27) into which the valve passage (6, 6a) assigned to the closing means (34) terminates and a drive chamber (28) located axially opposite and accommodating the coil (43), the leaf spring (67) being exclusively located in the drive chamber (28).

11. Valve assembly according to claim 9 or 10, **characterised in that** the leaf spring (67) has a meandering structure and at least three spring legs (89) extending adjacent to one another, wherein it is supported on the coil unit (23b) by means of its two outer spring legs (89, 89a, 89b) and in respect of the valve housing (17) by at least one inner spring leg (89, 89c) located between the two outer spring legs (89, 89a, 89b).

12. Valve assembly according to any of claims 8 to 11, **characterised in that** the valve unit (2) has adjusting means (72) for the variable presetting of the spring preload of the spring means (64).

13. Valve assembly according to claim 12, **characterised in that** the adjusting means (72) comprise a rigid adjusting element (78), which is supported on the valve housing (17) on one side and on the spring means (64) on the other side and which has at least one plastically deformable adjusting section (86), the plastic deformation of which causes a permanent position change of a support section (84) supporting the spring means (64) relative to the valve housing (17) in the axial direction of the permanent magnet unit (22a), the adjusting section (86) being expediently formed by means of laser beam energy for plastic deformation.

14. Valve assembly according to claim 13, **characterised in that** the adjusting element (78) comprises an annular support section (83) supported on the valve housing (17) and a web section (84a) crossing the annular opening (85) of the annular support section (83), wherein said web section (84a) forms the support section (84) supporting the spring means (64) and at the same time the plastically deformable adjusting section (86), and wherein the adjusting element (78) is in particular represented by a stamping consisting of metal.

15. Valve assembly according to any of claims 1 to 14, **characterised in that** the valve passage (6, 6a), to which the valve seat (33) cooperating with the closing means (34) is assigned, terminates into a valve chamber (27) of the valve unit (2), into which valve chamber (27) additionally terminates a further valve passage (6, 6b) not controllable by the closing means (34), wherein the two valve passages (6, 6a, 6b) can be fluidically connected to or disconnected from each other in a manner dependent on the position of the closing means (34), in particular in such a way that the valve unit (2) can be operated as a 2/2-way valve, and/or **in that** the valve assembly (1) has a connecting body (3), which is separate from the valve unit (2) and into which the valve unit (2) is installed with at least a section of its valve housing (17) - in particular in the manner of a cartridge - and through which several connecting passages (7), each communicating with a valve passage (6) of the valve unit (2), extend.

## Revendications

1. Ensemble formant soupape, avec au moins une unité de soupape (2) pouvant être actionnée de manière électrique, laquelle présente un dispositif d'entraînement (22) électrodynamique, disposé dans un carter de soupape (17), qui dispose d'une unité d'aimant permanent (22a) de forme annulaire stationnaire par rapport au carter de soupape (17) et contenant au moins un aimant permanent (37) et d'une unité de bobine (23b) pourvue d'une bobine (43) également de forme annulaire s'enfonçant de manière coaxiale dans l'unité d'aimant permanent (22a) de forme annulaire, dans lequel la bobine (43) peut être alimentée en courant électrique afin d'entraîner l'unité de bobine (23b) par rapport à l'unité d'aimant permanent (22a) en un mouvement d'entraînement (35), dans lequel l'unité de soupape (2) présente en outre un moyen de fermeture (34), qui fait face à un siège de soupape (33) associé à un canal de soupape (6, 6a) et qui est couplé en mouvement de telle manière à un support de bobine (46), supportant la bobine (43), de l'unité de bobine (23b) qu'il peut être positionné par rapport au siège de soupape (33) par le mouvement d'entraînement (39) de l'unité de bobine (23b), afin de fermer ou de libérer au choix le canal de soupape (6, 6a) associé, dans lequel l'unité d'aimant permanent (22a) de forme annulaire présente une découpure de guidage (48) axiale centrale, dans laquelle le support de bobine (46) de l'unité de bobine (23b) s'enfonce de manière axiale par guidage de manière à pouvoir être coulissé linéairement par une section de guidage (52) en forme de colonne encadrée par la bobine (43), dans lequel le moyen de fermeture (34) associé au siège de soupape (33) du canal de soupape (6, 6a) est disposé au niveau de la section de guidage (52), **caractérisé en ce que** le contour extérieur périphérique de la section de guidage (52) et le contour intérieur de la découpure de guidage (48) sont adaptés l'un à l'autre de telle sorte qu'ils définissent conjointement au moins un canal de passage de fluide (93) ouvert de part et d'autre axialement, lequel relie de manière fluidique en permanence les zones, se trouvant sur des côtés axialement opposés les uns aux autres, de l'unité d'aimant permanent (22a), d'un espace de logement (18), logeant l'unité de bobine (23b), du carter de soupape (17).

2. Ensemble formant soupape selon la revendication 1, **caractérisé en ce que** le moyen de fermeture (34) est disposé du côté frontal au niveau de la section de guidage (52).

3. Ensemble formant soupape selon la revendication 1 ou 2, **caractérisé en ce que** le moyen de fermeture (34) est regroupé avec la section de guidage (52) du support de bobine (46) pour former une unité modulaire, dans lequel le moyen de fermeture est formé de manière appropriée par un élément d'étanchéité (34a) séparé fixé côté frontal au niveau de la section de guidage (52).

4. Ensemble formant soupape selon l'une quelconque des revendications 1 à 3, **caractérisé en ce que** l'espace de logement (18) est fermé hermétiquement par rapport à l'environnement extérieur et loge le système d'entraînement (22) électrodynamique, dans lequel il est divisé par l'unité d'aimant permanent (22a) en une chambre de soupape (27), dans laquelle le canal de soupape (6, 6a) associé au moyen de fermeture (34) débouche, et en une chambre d'entraînement (28) opposée axialement logeant la bobine (43), dans lequel la découpure de guidage (48) s'étend entre la chambre de soupape (27) et la chambre d'entraînement (28) et la section de guidage (52) s'enfonce, depuis la chambre d'entraînement (28), dans la découpure de guidage (48) et présente, au niveau de son côté frontal tourné vers la chambre de soupape (27), le moyen de fermeture (34).

5. Ensemble formant soupape selon l'une quelconque des revendications 1 à 4, **caractérisé en ce que** le support de bobine (46) présente une plaque porteuse (47) espacée axialement de l'unité d'aimant permanent (22a) et réalisée de manière appropriée sous la forme d'un disque, au niveau de laquelle la bobine (43) est fixée et de laquelle la section de guidage (52) en forme de colonne dépasse axialement, dans lequel la section de guidage (52) est réalisée de manière appropriée d'un seul tenant avec la plaque porteuse (47).

6. Ensemble formant soupape selon l'une quelconque des revendications 1 à 5, **caractérisé en ce que** l'au moins un canal de passage de fluide (93) est formé par l'intermédiaire d'au moins une rainure longitudinale (93a) réalisée dans la surface périphérique extérieure (57) de la section de guidage (52).

7. Ensemble formant soupape selon l'une quelconque des revendications 1 à 6, **caractérisé en ce que** l'unité d'aimant permanent (22a) de forme annulaire présente un évidement d'enfoncement (42) de forme annulaire ouvert axialement, dans lequel la bobine (43) est enfoncée axialement et qui est délimité de l'intérieur radialement par une section de paroi (54) cylindrique creuse de l'unité d'aimant permanent (22a), à travers laquelle la découpure de guidage (48) s'étend.

8. Ensemble formant soupape selon l'une quelconque des revendications 1 à 7, **caractérisé en ce que** l'unité de bobine (23b) est précontrainte par des moyens de ressort (64) de l'unité de soupape (2) axialement dans une position de base, dans laquelle le moyen de fermeture (34) adopte de manière appropriée une position de fermeture reposant au niveau du siège de soupape (33) qui lui est associé.

9. Ensemble formant soupape selon la revendication 8, **caractérisé en ce que** les moyens de ressort (64) présentent un ressort à lames (67) orienté de manière transversale par rapport à la direction du mouvement d'entraînement (39) de l'unité de bobine (23b), lequel ressort à lames prend appui d'une part au niveau de l'unité de bobine (23b) et d'autre part par rapport au carter de soupape (17).

10. Ensemble formant soupape selon la revendication 9, **caractérisé en ce que** le carter de soupape (17) définit un espace de logement (18), dans lequel le dispositif d'entraînement (22) électrodynamique est logé, dans lequel l'espace de logement (18) est divisé par l'unité d'aimant permanent (22a) en une chambre de soupape (27), dans laquelle le canal de soupape (6, 6a) associé au moyen de fermeture (34) débouche, et en une chambre d'entraînement (28) axialement opposée, dans laquelle la bobine (43) est disposée, dans lequel le ressort à lames (67) est disposé exclusivement dans la chambre d'entraînement (28).

11. Ensemble formant soupape selon la revendication 9 ou 10, **caractérisé en ce que** le ressort à lames (67) est structuré de manière à présenter une forme sinueuse et présente au moins trois branches de ressort (89) s'étendant les unes à côté des autres, dans lequel il prend appui au moyen de ses deux branches de ressort (89, 89a, 89b) extérieures au niveau de l'unité de bobine (23b), et, par au moins une branche de ressort (89, 89c) intérieure située entre les deux branches de ressort (89, 89a, 89b) extérieures, par rapport au carter de soupape (17).

12. Ensemble formant soupape selon l'une quelconque des revendications 8 à 11, **caractérisé en ce que** l'unité de soupape (2) dispose de moyens de réglage (72) servant à spécifier de manière variable la précontrainte de ressort des moyens de ressort (64).

13. Ensemble formant soupape selon la revendication 12, **caractérisé en ce que** les moyens de réglage (72) contiennent un élément de réglage (78) rigide prenant appui d'une part au niveau du carter de soupape (17) et d'autre part au niveau des moyens de ressort (64), lequel présente au moins une section de réglage (86) déformable plastiquement, dont la déformation plastique entraîne une modification de position durable d'une section de soutien (84) soutenant les moyens de ressort (64) par rapport au carter de soupape (17) dans la direction axiale de l'unité d'aimant permanent (22a), dans lequel la section de réglage (86) est réalisée de manière appropriée aux fins de la déformation plastique au moyen d'une énergie de rayon laser.

14. Ensemble formant soupape selon la revendication 13, **caractérisé en ce que** l'élément de réglage (78) présente une section de soutien (83) de forme annulaire prenant appui au niveau du carter de soupape (17) et une section d'entretoise (84a) traversant l'ouverture annulaire (85) de la section de soutien (83) de forme annulaire, dans lequel ladite section d'entretoise (84a) forme la section de soutien (84) soutenant les moyens de ressort (64) et, dans le même temps, la section de réglage (86) déformable plastiquement et dans lequel l'élément de réglage (78) est formé en particulier par une pièce découpée constituée de métal.

15. Ensemble formant soupape selon l'une quelconque des revendications 1 à 14, **caractérisé en ce que** le canal de soupape (6, 6a), auquel est associé un siège de soupape (33) coopérant avec le moyen de fermeture (34), débouche dans une chambre de soupape (27) de l'unité de soupape (2), dans laquelle par ailleurs également encore un autre canal de soupape (6, 6b) ne pouvant pas être commandé par le moyen de fermeture (84) débouche, dans lequel les deux canaux de soupape (6, 6a, 6b) peuvent être reliés l'un à l'autre de manière fluidique en fonction de la position du moyen de fermeture (34) ou peuvent être séparés l'un de l'autre, en particulier de telle manière que l'unité de soupape (2) peut fonctionner en tant que soupape à 2/2 voies, et/ou que l'ensemble formant soupape (1) présente un corps de raccordement (3) isolé par rapport à l'unité de soupape (2), dans lequel l'unité de soupape (2) est insérée par au moins une section de son carter de soupape (17) - en particulier à la manière d'une cartouche - et qui est traversé par plusieurs canaux de raccordement (7), qui communiquent respectivement avec un canal de soupape (6) de l'unité de soupape (2).
